# EUROPEAN PATENT APPLICATION

(11) **EP 3 822 523 A1**
(43) Date of publication of application: **19.05.2021**
(21) Application number: 19857526.8
(22) Date of filing: 11.07.2019
(51) Int. Cl.: F16K 11/07, F16K 27/00, F16K 31/363

(54) **SPOOL VALVE**

(30) Priority: 07.09.2018 JP 2018167780
(71) Applicant: SMC Corporation, Tokyo 101-0021 (JP)
(72) Inventor: TAKADA Yoshiyuki, Tokyo 1010021 (JP); YOSHIMURA Shinichi, Tsukubamirai-shi, Ibaraki 3002493 (JP); YOSHIDA Masaru, Tsukubamirai-shi Ibaraki 3002436 (JP); MATSUMURA Kenichi, Tsukubamirai-shi Ibaraki 3002436 (JP); MORODOMI Yoichi, Tsukubamirai-shi Ibaraki 3002436 (JP)
(74) Representative: Keil & Schaafhausen Patentanwälte PartGmbB
(86) International application number: PCT/JP2019/027459
(87) International publication number: WO 2020/049870

(57) **Abstract**

[Object] To obtain a spool valve in which the flow rate of a discharge fluid discharged from a discharge port is increased.

[Solution] Enlarged holes 6a are formed at respective end portions of a valve hole 6 housing a spool 4 by forming an upper recessed groove 8 and a lower recessed groove 9 at each end portion. The respective lower recessed grooves 9 are in communication with discharge ports E1 and E2. The spool 4 includes discharge lands 4c and 4d and discharge packing portions 10c and 10d, which open and close discharge passages AE1 and AE2 connecting an output port P and the discharge ports E1 and E2. When the discharge land 4c or 4d and the discharge packing portion 10c or 10d open the discharge passage AE1 or AE2 by displacing of the spool 4, the discharge passage AE1 or AE2 and the discharge port E1 or E2 are in communication with each other through the enlarged hole 6a by positioning the discharge land 4c or 4d and the discharge packing portion 10c or 10d inside the enlarged hole 6a.

## Description

### Technical Field

The present invention relates to a spool valve that opens and closes passages between a plurality of ports by using a spool that slides in a valve hole.

### Background Art

Spool valves that open and close passages between a plurality of ports by using a spool that slides in a valve hole are known as disclosed in, for example, PTLs 1 and 2.

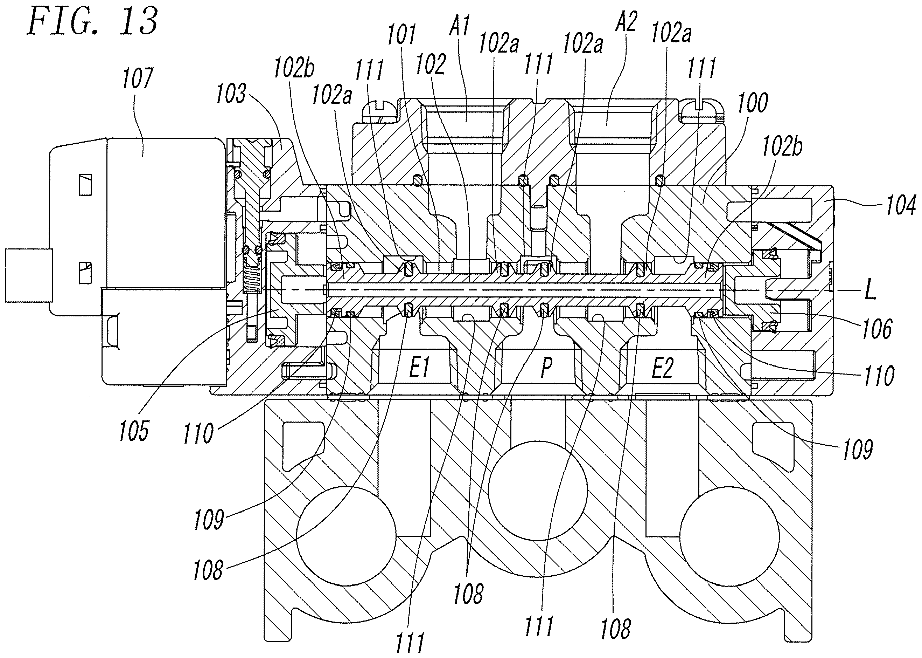

Existing spool valves typically have a configuration such as that illustrated in Fig. 13. The spool valve is a five-port valve. The spool valve has a valve hole 101, which is in communication with a plurality of ports P, A1, A2, E1, and E2, inside a valve body 100, which has the ports P, A1, A2, E1, and E2. A spool 102 is housed in the valve hole 101 so as to be slidable in a direction along an axis L. Piston holders 103 and 104 are respectively attached to one end and the other end of the valve body 100. Pilot pistons 105 and 106 are respectively housed inside the piston holders 103 and 104. The spool 102 is driven via the pilot pistons 105 and 106 by a solenoid pilot valve 107 causing a pilot fluid to alternately act on the pilot pistons 105 and 106.

A plurality of (four) opening and closing lands 102a for opening and closing passages between adjacent ports and a plurality of guide lands 102b for stably sliding the spool 102 are formed on the spool 102. A spool packing portion 108 is attached to the periphery of each opening and closing land 102a. A guide ring 109 and a check seal 110 are attached to the periphery of each guide land 102b. The guide land 102b, which is formed at each end of the spool 102, also serves as a closing land for closing each end portion of the valve hole 101.

Recesses 111, each of which has an annular shape and has a diameter larger than the diameter of the valve hole 101, are formed at the positions where the ports P, A1, A2, E1, and E2 are in communication with the valve hole 101. The ports P, A1, A2, E1, and E2 are in communication with the valve hole 101 via the recesses 111.

Commonly, in such a spool valve, the flow rate of a control fluid (air) flowing in the spool valve is strongly required to increase to efficiently drive an actuator for, for example, an air cylinder. In particular, it is desired to efficiently control the actuator by increasing the flow rate of the air discharged from the actuator through the spool valve and by thus achieving smooth exhaust and a reduction in exhaust pressure.

For this reason, to increase the flow rate of air, the recesses 111, each of which has an annular shape, are formed in the portions of the existing spool valve where the ports P, A1, A2, E1, and E2 are in communication with the valve hole 101. However, the diameter (depth) of each recess 111 is likely to be limited by, for example, the lateral width of the valve body 100. Thus, there is a limit to the increase of the flow rate of air by increasing the diameter of the recess.

Such a problem may occur similarly in, for example, four-port valves and three-port valves in addition to such a five-port valve.

### Citation List

### Patent Literature

PTL 1: Japanese Unexamined Patent Application Publication No. 8-86380
PTL 2: Japanese Unexamined Patent Application Publication No. 8-93941

### Summary of Invention

### Technical Problem

A technical object of the present invention is to obtain a spool valve having a simple rational design structure capable of increasing the flow rate of the fluid discharged from a discharge port without such an existing annular recess formed in the portion of the spool valve where the discharge port is in communication with a valve hole.

### Solution to Problem

To solve the problem, a spool valve of the present invention includes: a valve body having a height, a width, and a length; a plurality of ports that are open in an end face or both end faces of the valve body in a direction of the height of the valve body; a valve hole extending inside the valve body in a direction of the length of the valve body; a spool housed inside the valve hole so as to be displaceable in a direction along an axis of the valve hole; and a pilot valve that drives the spool via a pilot piston.

The plurality of ports are an input port, an output port, and a discharge port, each of which is in communication with the valve hole, the discharge port being disposed at a position closer to an end portion of the valve body than the output port. An enlarged hole is formed at an end portion of the valve hole by forming, at the end portion closer to the position where the discharge port is disposed of both end portions of the valve body in the direction of the length of the valve body, an upper recessed groove and a lower recessed groove for increasing a sectional area of the valve hole in the direction of the height of the valve body, the upper recessed groove and the lower recessed groove being formed at respective positions in the valve hole facing each other in an up-down direction so as to extend from the end portion of the valve body to a position of the discharge port, the enlarged hole being in communication with the discharge port through the lower recessed groove. The spool includes an output land and an output packing portion that open and close an output passage connecting the input port and the output port, and a discharge land and a discharge packing portion that open and close a discharge passage connecting the output port and the discharge port. When the discharge land and the discharge packing portion open the discharge passage by displacing of the spool, the discharge passage and the discharge port are in communication with each other through the enlarged hole by positioning the discharge land and the discharge packing portion inside the enlarged hole.

The spool valve of the present invention may be configured such that a pair of hole surface portions, each of which is formed by a portion of a hole surface of the valve hole, are interposed, so as to face each other with the axis in between, between the upper recessed groove and the lower recessed groove at an inner side surface of the enlarged hole, and when the discharge land and the discharge packing portion are displaced to open or close the discharge passage, the discharge packing portion is guided while being in contact with the hole surface portions.

In this case, the pair of hole surface portions can be formed in at least an area in the enlarged hole where the discharge land and the discharge packing portion are displaced to open or close the discharge passage.

In the spool valve of the present invention, preferably, groove widths of the upper recessed groove and the lower recessed groove are equal to each other, and the groove widths are each larger than a diameter of the valve hole.

In the spool valve of the present invention, preferably, a piston holder is attached to the end portion of the valve body where the enlarged hole is formed, the pilot piston is housed inside the piston holder, a portion of the pilot piston projects into the enlarged hole, a connecting portion is formed at an end portion of the spool at a position adjacent to the discharge land so as to project into the enlarged hole, and the spool is connected to the pilot piston via the connecting portion.

In this case, preferably, the connecting portion is formed by a connecting shaft extending along the axis, a connecting hole is formed in the pilot piston, and the spool and the pilot piston are connected so as to be concentric with each other by fitting the connecting shaft into the connecting hole.

According to a specific configuration aspect of the present invention, the spool valve is a five-port valve and has one input port, two output ports, and two discharge ports, the two discharge ports are formed at respective positions closer to one end and another end of the valve body, the enlarged hole and the discharge port are formed at each of positions closer to one end and another end of the valve hole, and the discharge land, the discharge packing portion, and the pilot piston are disposed at each of positions closer to one end and another end of the spool.

In this case, preferably, an external shape and an internal shape of the valve body are each axisymmetric about a central axis passing through a center of the input port.

### Advantageous Effects of Invention

In the spool valve of the present invention, the enlarged hole is formed at an end portion of the valve hole by forming the upper recessed groove and the lower recessed groove for increasing the sectional area of the valve hole in the direction of the height of the valve body, and a discharge fluid from the output port is discharged from the discharge port through the enlarged hole. Thus, even if a deep recess cannot be formed at the position of the discharge port due to the valve body having a small lateral width, it is possible to increase the flow rate of a discharge fluid.

### Brief Description of Drawings

[Fig. 1] Fig. 1 is a longitudinal sectional view illustrating a first embodiment of a spool valve according to the present invention.
[Fig. 2] Fig. 2 is a partial enlarged view illustrating an enlarged left end portion of the spool valve in Fig. 1.
[Fig. 3] Fig. 3 is a partial enlarged view illustrating an enlarged right end portion of the spool valve in Fig. 1.
[Fig. 4] Fig. 4 is a sectional view of the spool valve in Fig. 1 taken along line IV-IV.
[Fig. 5] Fig. 5 is a sectional view of the spool valve in Fig. 1 taken along line V-V.
[Fig. 6] Fig. 6 is an enlarged sectional view of a portion that connects a spool and a pilot piston.
[Fig. 7] Fig. 7 is a sectional view of the spool valve in Fig. 1 taken along line VII-VII.
[Fig. 8] Fig. 8 is a bottom view of the spool valve in Fig. 1.
[Fig. 9] Fig. 9 is a sectional view illustrating a second embodiment of a spool valve according to the present invention.
[Fig. 10] Fig. 10 is a sectional view illustrating an internal structure of a valve body of the spool valve in Fig. 9.
[Fig. 11] Fig. 11 is a sectional view of the spool valve in Fig. 9 taken along line XI-XI.
[Fig. 12] Fig. 12 is a sectional view of the spool valve in Fig. 9 taken along line XII-XII.
[Fig. 13] Fig. 13 is a longitudinal sectional view of a known spool valve. Description of Embodiments

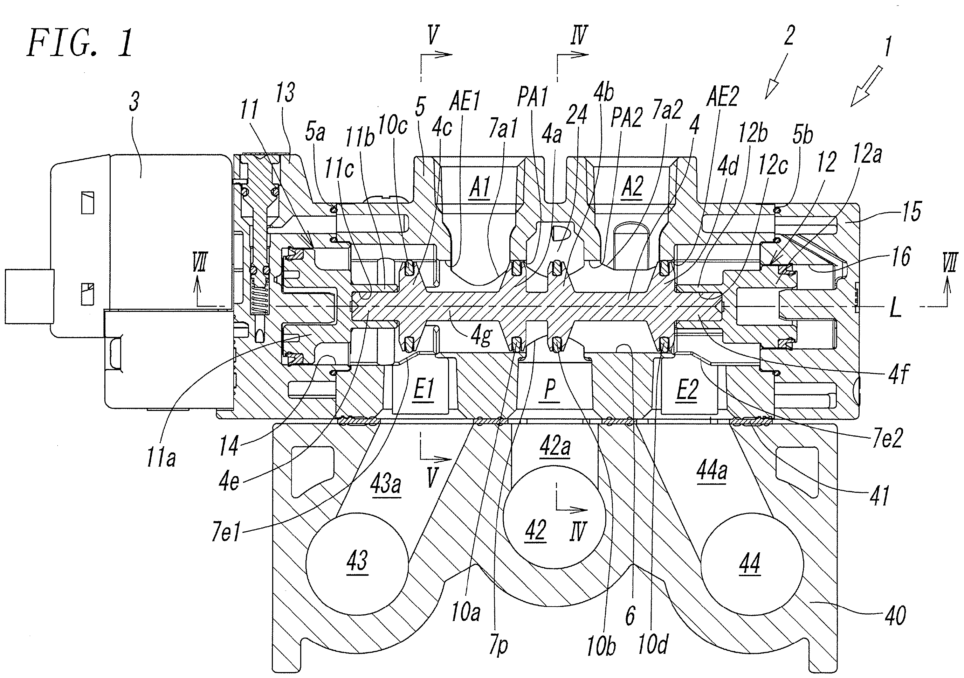

Figs. 1 to 8 illustrate a first embodiment of a spool valve according to the present invention. A spool valve 1, together with other spool valves having a similar configuration, forms a manifold valve by being mounted on a manifold 40 with a gasket 41 interposed in between.

As illustrated in Fig. 1, the spool valve 1 is a five-port valve and includes a main valve unit 2, which includes a spool 4 for opening and closing passages, and a pilot valve 3, which is a solenoid-operated valve and drives the spool 4. The pressure fluid to be controlled by the spool valve 1 is compressed air.

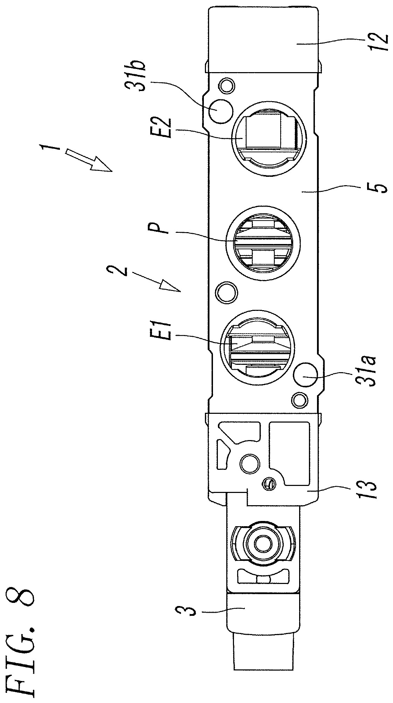

A valve body 5 of the main valve unit 2 has a square block shape and has a height (up-down direction in Fig. 1), a length (left-right direction in Fig. 1), and a width (direction perpendicular to the plane of Fig. 1). Five ports P, A1, A2, E1, and E2, which are usable for input, output, or exhaust, are formed in a lower surface and an upper surface of the valve body 5 in the height direction so as to be arranged in the length direction of the valve body 5. Specifically, also with reference to Fig. 8, the input port P, which is in the middle, and the first discharge port E1 and the second discharge port E2, which are positioned on respective sides of the input port P, are disposed in the lower surface of the valve body 5. The first output port A1 and the second output port A2 are disposed in the upper surface of the valve body 5. The valve body 5 is a valve body obtained by casting an aluminum alloy.

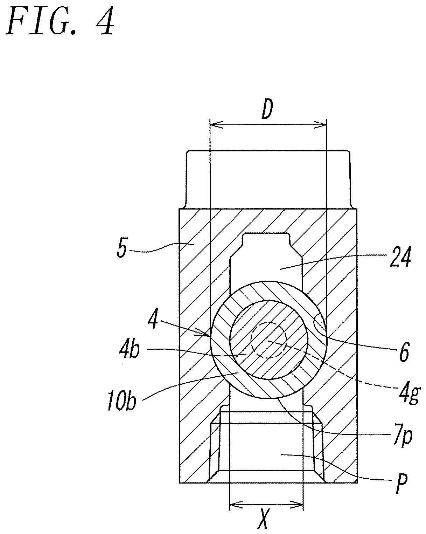

A valve hole 6, which has a circular shape and horizontally passes through the valve body 5 from a first end 5a to a second end 5b opposite to the first end 5a, is disposed inside the valve body 5. The spool 4 is housed inside the valve hole 6 so as to be slidable along an axis L of the valve hole 6. A diameter D (see Fig. 4) of the valve hole 6 is uniform throughout the length of the valve hole 6.

The five ports P, A1, A2, E1, and E2 are in communication with the valve hole 6 respectively through five communication openings 7p, 7a1, 7a2, 7e1, and 7e2, which are open in a hole surface of the valve hole 6.

That is, on the lower semicircumference side of the valve hole 6, the input communication opening 7p, which is in communication with the input port P, is open at the center of the valve hole 6 in the direction along the axis L. The first discharge communication opening 7e1, which is in communication with the first discharge port E1, is open on one side of the input communication opening 7p. The second discharge communication opening 7e2, which is in communication with the second discharge port E2, is open on the other side of the input communication opening 7p.

On the upper semicircumference side of the valve hole 6, the first output communication opening 7a1, which is in communication with the first output port A1, is open at a position between the input communication opening 7p and the first discharge communication opening 7e1. The second output communication opening 7a2, which is in communication with the second output port A2, is open at a position between the input communication opening 7p and the second discharge communication opening 7e2.

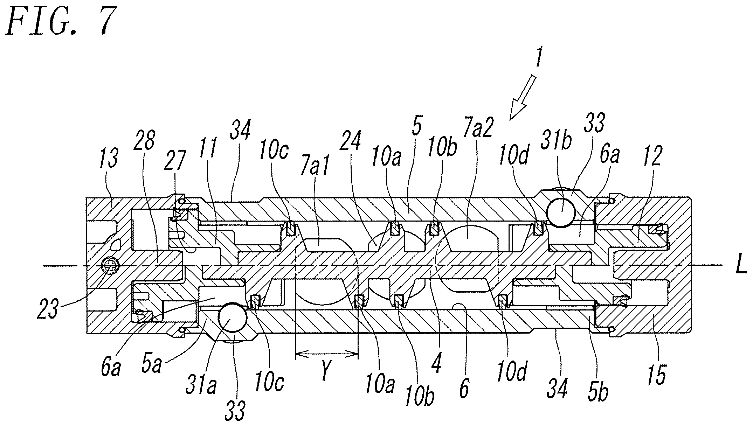

All the communication openings 7p, 7a1, 7a2, 7e1, and 7e2 have a noncircular shape. Among these communication openings, as is clear from Figs. 4 and 7, the input communication opening 7p, the first output communication opening 7a1, and the second output communication opening 7a2 are each formed in a portion of the circumference of the valve hole 6. The extent to which the communication openings 7p, 7a1, and 7a2 are each open in the circumferential direction of the valve hole 6 is a half or less of the entire circumference of the valve hole 6. In other words, an opening diameter X of each of the communication openings 7p, 7a1, and 7a2 in a direction orthogonal to the axis L is equal to or less than the diameter D of the valve hole 6. An opening diameter Y of each of the communication openings 7p, 7a1, and 7a2 in the direction along the axis L is a half or more of the diameter D of the valve hole 6, preferably equal to or less than the diameter D of the valve hole 6.

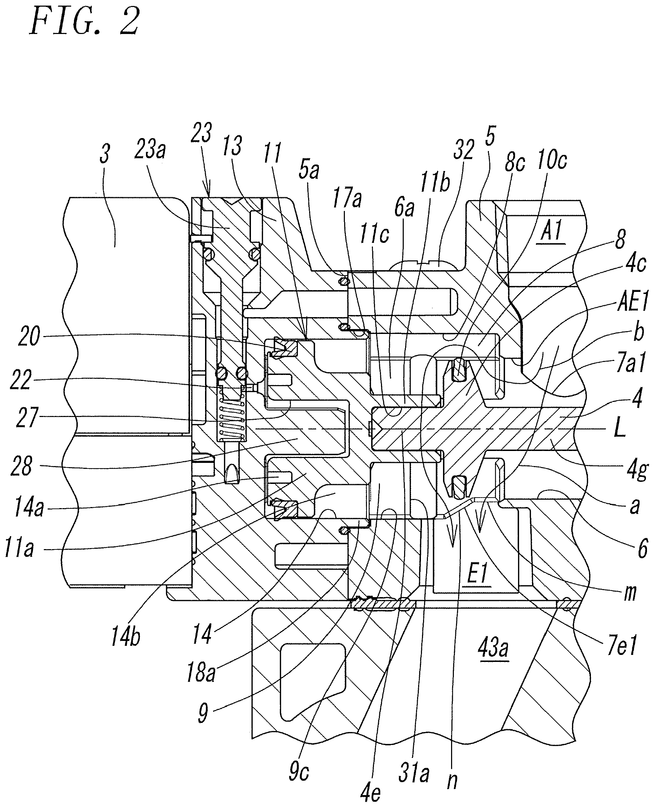

On the other hand, the first discharge communication opening 7e1 and the second discharge communication opening 7e2 are formed as follows. That is, as is clear from Figs. 2, 3, and 5, a pair of recessed grooves 8 and 9 for increasing the hole diameter of the valve hole 6 in the up-down direction of the valve body 5, that is, the upper recessed groove 8 and the lower recessed groove 9, are formed at a position closer to the first end 5a of the valve body 5 and a position closer to the second end 5b of the valve body 5. The upper recessed groove 8 and the lower recessed groove 9 are formed, along the valve hole 6 from an end portion of the valve body 5 to the position where the first discharge port E1 or the second discharge port E2 is formed, at respective positions in the valve hole 6 facing each other in the up-down direction. The first discharge communication opening 7e1 and the second discharge communication opening 7e2 are each open in a portion of the valve hole 6 where the corresponding lower recessed groove 9 is formed. That is, an enlarged hole 6a, which is formed by the valve hole 6, the upper recessed groove 8, and the lower recessed groove 9, is formed at each end portion of the valve hole 6. The respective enlarged holes 6a are in communication with the first discharge port E1 and the second discharge port E2 through the first discharge communication opening 7e1 and the second discharge communication opening 7e2, respectively.

More specifically, at the position closer to the first end 5a of the valve body 5, the upper recessed groove 8 and the lower recessed groove 9 extend to a position adjacent to a first discharge passage AE1, which connects the first output port A1 and the first discharge port E1. The first discharge communication opening 7e1, which has a quadrilateral shape in plane view, is formed at an inner end portion of the lower recessed groove 9 such that a side of the quadrilateral is adjacent to the first discharge passage AE1.

Similarly, at the position closer to the second end 5b of the valve body 5, the upper recessed groove 8 and the lower recessed groove 9 extend to a position adjacent to a second discharge passage AE2, which connects the second output port A2 and the second discharge port E2. The second discharge communication opening 7e2, which has a quadrilateral shape in plane view, is formed at an inner end portion of the lower recessed groove 9 such that a side of the quadrilateral is adjacent to the second discharge passage AE2.

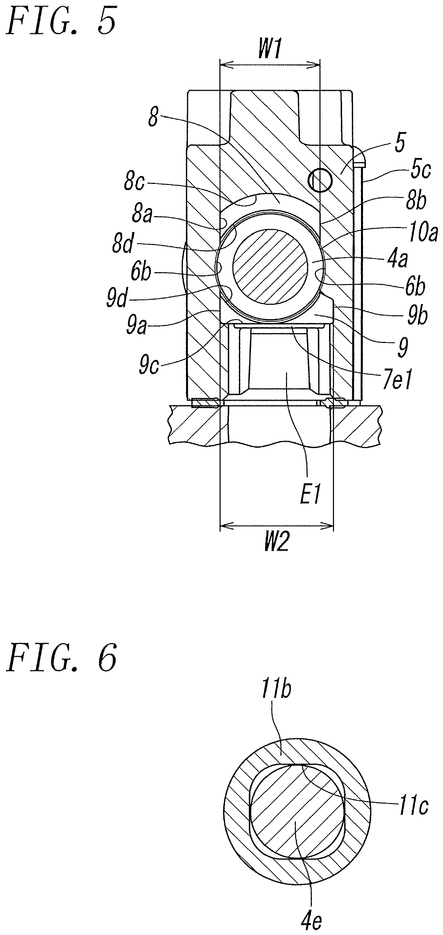

As in the part closer to the first end 5a of the valve body 5 illustrated in Fig. 5, the upper recessed groove 8 includes left and right side walls 8a and 8b, which are parallel to each other, and a groove bottom wall 8c, which has an arc shape concentric with the valve hole 6. A groove width W1 of the upper recessed groove 8 is slightly smaller than the diameter D (see Fig. 4) of the valve hole 6. The opening width of an opening 8d, which allows the upper recessed groove 8 to be in communication with the valve hole 6, is equal to the groove width W1 of the upper recessed groove 8. In this case, to increase the sectional area of the passage as much as possible, the opening width W1 of the opening 8d is preferably more than a half of the diameter D of the valve hole 6, more preferably 80 percent or more of the diameter D. In the illustrated example, the opening width W1 of the opening 8d is about 90 percent of the diameter D.

On the other hand, the lower recessed groove 9 includes left and right side walls 9a and 9b, which are parallel to each other, and a groove bottom wall 9c, which has a flat shape.

Of the left and right side walls 9a and 9b, the one side wall 9a is flush with the one side wall 8a of the upper recessed groove 8, and the other side wall 9b is positioned closer to a side surface 5c of the valve body 5 than the other side wall 8b of the upper recessed groove 8. Thus, a groove width W2 of the lower recessed groove 9 is larger than the groove width W1 of the upper recessed groove 8. However, the opening width of an opening 9d, which allows the lower recessed groove 9 to be in communication with the valve hole 6, is equal to the opening width W1 of the opening 8d of the upper recessed groove 8.

As a result, a pair of hole surface portions 6b, each of which is formed by a portion of the hole surface of the valve hole 6, are interposed, so as to face each other with the axis L in between, between the opening 8d of the upper recessed groove 8 and the opening 9d of the lower recessed groove 9. As illustrated in Figs. 1 and 2, when discharge lands 4c and 4d and discharge packing portions 10c and 10d open or close the discharge passages AE1 and AE2, the discharge packing portions 10c and 10d are guided while being in contact with the hole surface portions 6b.

The groove bottom walls 9c of the lower recessed grooves 9 extend parallel to the axis L from respective end portions of the valve body 5 to respective end portions of the first discharge communication opening 7e1 and the second discharge communication opening 7e2 and are then inclined in respective directions toward the axis L. Subsequently, the orientations of the groove bottom walls 9c of the lower recessed grooves 9 change, so as to be parallel to the axis L again, in the vicinities of the centers of the first discharge communication opening 7e1 and the second discharge communication opening 7e2, and the respective groove bottom walls 9c of the lower recessed grooves 9 then extend to the first discharge passage AE1 and the second discharge passage AE2. Thus, the lower recessed grooves 9 each have, at the position of the first discharge communication opening 7e1 or the second discharge communication opening 7e2, an opening portion m, which is parallel to the axis L (horizontal), and an opening portion n, which is gradually inclined in a direction away from the axis L toward a position closer to an end portion of the valve hole 6.

In Fig. 1, the external shape and the internal shape of the valve body 5 are each axisymmetric about the central axis that is orthogonal to the axis L and that passes through the center of the input port P.

As is clear from Fig. 1, the spool 4 includes a plurality of lands 4a, 4b, 4c, and 4d for opening and closing the passages connecting adjacent ones of the ports P, A1, A2, E1, and E2, and packing portions 10a, 10b, 10c, and 10d, which are respectively attached to the peripheries of the lands 4a, 4b, 4c, and 4d. Specifically, the spool 4 includes the first output land 4a and the first output packing portion 10a, which open and close a first output passage PA1 connecting the input port P (input communication opening 7p) and the first output port A1 (first output communication opening 7a1). In addition, the spool 4 includes the second output land 4b and the second output packing portion 10b, which open and close a second output passage PA2 connecting the input port P (input communication opening 7p) and the second output port A2 (second output communication opening 7a2). In addition, the spool 4 includes the first discharge land 4c and the first discharge packing portion 10c, which open and close the first discharge passage AE1 connecting the first output port A1 (first output communication opening 7a1) and the first discharge port E1 (first discharge communication opening 7e1). In addition, the spool 4 includes the second discharge land 4d and the second discharge packing portion 10d, which open and close the second discharge passage AE2 connecting the second output port A2 (second output communication opening 7a2) and the second discharge port E2 (second discharge communication opening 7e2).

A first connecting portion 4e, which is configured to be connected to a first pilot piston 11, is formed at one end of the spool 4 in the direction along the axis L. The first connecting portion 4e is formed by a cylindrical connecting shaft. The first connecting portion 4e extends, so as to be concentric with the spool 4, to a position adjacent to the first discharge land 4c.

A second connecting portion 4f, which is configured to be connected to a second pilot piston 12, is formed at the other end of the spool 4 in the direction along the axis L. The second connecting portion 4f is formed by a cylindrical connecting shaft. The second connecting portion 4f extends, so as to be concentric with the spool 4, to a position adjacent to the second discharge land 4d.

The diameter of each of the connecting portions 4e and 4f is equal to the diameter of a shaft portion 4g, which is interposed between adjacent lands. The length of the spool 4 including the connecting portions 4e and 4f is shorter than the length of the valve hole 6 and is a length in which the one end and the other end of the spool 4 do not project outside the valve hole 6 even if the spool 4 is at any switching position.

As described above, although the lands 4a, 4b, 4c, and 4d and the packing portions 10a, 10b, 10c, and 10d for opening and closing the passages are formed on the spool 4, a guide land for guiding the switching operation of the spool, such as that formed at each end of a spool of a known spool valve illustrated in Fig. 13, is not formed on the spool 4. Thus, each length of the spool 4 and the valve hole 6 in the direction along the axis L is shorter than each length of the spool and a valve hole of the known spool valve, and components such as a guide ring and a check seal attached to the guide land do not have to be attached.

A first piston holder 13, which is formed by a substantially rectangular block and is made of polybutylene terephthalate (PBT), is attached to the first end 5a of the valve body 5. The first pilot piston 11 is housed in a first piston chamber 14 inside the first piston holder 13 so as to be slidable in the direction along the axis L.

A second piston holder 15, which is formed by a substantially rectangular block and is made of PBT, is attached to the second end 5b of the valve body 5. The second pilot piston 12, which has a diameter smaller than that of the first pilot piston 11, is housed in a second piston chamber 16 inside the second piston holder 15 so as to be slidable in the direction along the axis L.

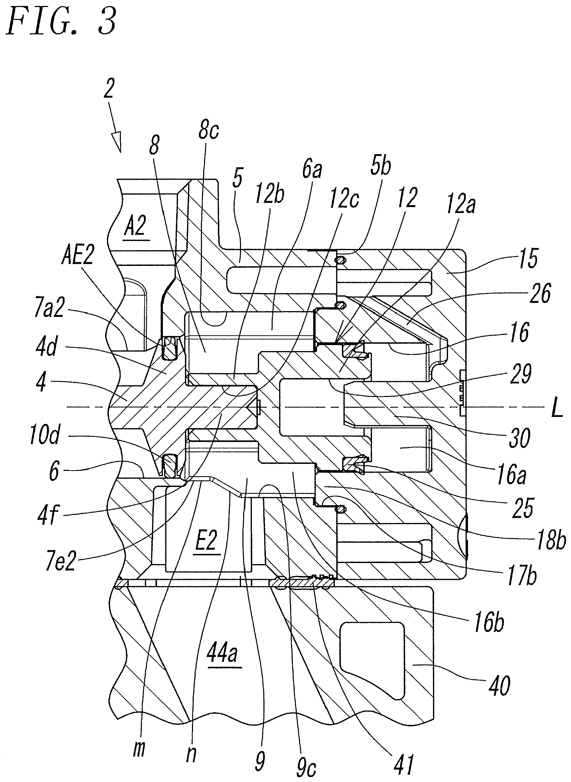

As specifically illustrated in Figs. 2 and 3, to connect the valve body 5 and the first piston holder 13, and the valve body 5 and the second piston holder 15 in the state in which the valve hole 6 and the first piston chamber 14, and the valve hole 6 and the second piston chamber 16 are positioned so as to be concentric with each other, a first fitting hole 17a and a second fitting hole 17b, each of which has a diameter larger than that of the valve hole 6, are respectively formed at the first end 5a and the second end 5b of the valve body 5 so as to be concentric with the valve hole 6.

On the other hand, a first fitting portion 18a and a second fitting portion 18b, each of which has an annular shape and which respectively surround the first piston chamber 14 and the second piston chamber 16, are respectively formed on the first piston holder 13 and the second piston holder 15 so as to be concentric with the first fitting hole 17a and the second fitting hole 17b respectively. The first piston holder 13 and the second piston holder 15 are each connected to the valve body 5 with connecting screws (not illustrated) in the state in which the fitting portions 18a and 18b are respectively fitted into the fitting holes 17a and 17b.

The diameter of the first fitting hole 17a and the diameter of the second fitting hole 17b are equal to each other. The outer diameter of the first fitting portion 18a and the outer diameter of the second fitting portion 18b are also equal to each other.

The first pilot piston 11 includes a piston body 11a, which is fitted into the first piston chamber 14 via a seal member 20, and a connecting tubular portion 11b, which projects from an end face of the piston body 11a into the enlarged hole 6a. A connecting hole 11c, which has a rectangular shape, is formed inside the connecting tubular portion 11b so as to be concentric with the spool 4. The first pilot piston 11 and the one end of the spool 4 are connected so as to be concentric with each other by fitting the first connecting portion 4e, which is positioned at the one end of the spool 4, into the connecting hole 11c. The connecting hole 11c is formed into a rectangular shape to make it easy to fit the connecting portion 4e into the connecting hole 11c by facilitating release of air during the fitting.

Inside the first piston chamber 14, a first pilot chamber 14a is formed at a position closer to a back surface of the piston body 11a, and a first open chamber 14b is formed at a position closer to a front surface of the piston body 11a. The first pilot chamber 14a is in communication with the input port P through a pilot communication hole 22, a manual operating portion 23, the pilot valve 3, a pilot communication hole (not illustrated), and a pilot-fluid inlet 24 (see Fig. 1) of the valve body 5. On the other hand, the first open chamber 14b is always in communication with the first discharge port E1 through the first discharge communication opening 7e1 by being in communication with the enlarged hole 6a of the valve hole 6.

A guide hole 27 is formed at the center of a back surface of the first pilot piston 11. A guide shaft 28, which is formed on the first piston holder 13, is fitted into the guide hole 27. The first pilot piston 11 is guided by the guide shaft 28.

The pilot-fluid inlet 24 is formed at a position facing the input communication opening 7p in the hole surface of the valve hole 6 and is always in communication with the input port P via the valve hole 6.

On the other hand, the second pilot piston 12 includes a piston body 12a, which is fitted into the second piston chamber 16 via a seal member 25, and a connecting tubular portion 12b, which projects from an end face of the piston body 12a into the enlarged hole 6a. A connecting hole 12c, which has a rectangular shape, is formed inside the connecting tubular portion 12b so as to be concentric with the spool 4. The second pilot piston 12 and the other end of the spool 4 are connected so as to be concentric with each other by fitting the second connecting portion 4f, which is positioned at the other end of the spool 4, into the connecting hole 12c.

Inside the second piston chamber 16, a second pilot chamber 16a is formed at a position closer to a back surface of the piston body 12a, and a second open chamber 16b is formed at a position closer to a front surface of the piston body 12a. The second pilot chamber 16a allows a pilot fluid from the input port P to always flow thereinto through a pilot supply hole 26 by being in communication with the pilot-fluid inlet 24 via a pilot communication hole (not illustrated). On the other hand, the second open chamber 16b is always in communication with the second discharge port E2 through the second discharge communication opening 7e2 from the enlarged hole 6a of the valve hole 6.

A guide hole 29 is formed at the center of a back surface of the second pilot piston 12. A guide shaft 30, which is formed on the second piston holder 15, is fitted into the guide hole 29. The second pilot piston 12 is guided by the guide shaft 30.

The pilot valve 3 is a three-port valve. When the pilot valve 3 is energized, a pilot fluid from the input port P is supplied to the first pilot chamber 14a. When the pilot valve 3 is not energized, a pilot fluid is discharged from the first pilot chamber 14a.

The manual operating portion 23 is used, for example, during power failure or maintenance, for achieving, under manual operation, the same operating state as that in which the pilot valve 3 is energized. The manual operating portion 23 is configured such that a pilot fluid is supplied to the first pilot chamber 14a by pushing down an operating shaft 23a. However, the configuration and the operation of the manual operating portion 23 are known, and detailed descriptions are thus omitted herein.

To mount the spool valve 1 on the manifold 40, as illustrated in Figs. 2 and 7, a first screw insertion hole 31a and a second screw insertion hole 31b for inserting a fixing screw 32 are respectively formed at the first end 5a and the second end 5b of the valve body 5 so as to pass through the valve body 5 in the height direction at positions opposite to each other with the valve hole 6 interposed in between.

The positions where the screw insertion holes 31a and 31b are formed are the positions where the enlarged holes 6a positioned at the respective end portions of the valve hole 6 are formed. The screw insertion holes 31a and 31b are formed at such positions so as to cross the valve hole 6.

More specifically, the first screw insertion hole 31a is formed at a position in the valve hole 6 outside the position where the first discharge packing portion 10c blocks the first discharge passage AE1 connecting the first output communication opening 7a1 and the first discharge communication opening 7e1 such that a portion of the first screw insertion hole 31a and a portion of the valve hole 6 cross each other.

The second screw insertion hole 31b is formed at a position in the valve hole 6 outside the position where the second discharge packing portion 10d blocks the second discharge passage AE2 connecting the second output communication opening 7a2 and the second discharge communication opening 7e2 such that a portion of the second screw insertion hole 31b and a portion of the valve hole 6 cross each other.

The screw insertion holes 31a and 31b are disposed at such positions, and as a result the diameter of the valve hole 6 can be increased so as to reach the positions where the valve hole 6 crosses the screw insertion holes 31a and 31b. Accordingly, it is possible to increase the flow rate of a control fluid flowing through each of the passages PA1, PA2, AE1, and AE2.

Ridges 33, which extend in the up-down direction along the screw insertion holes 31a and 31b, are formed at respective positions where the screw insertion holes 31a and 31b are formed in one and the other side surfaces of the valve body 5 in the width direction. In addition, recessed grooves 34, which extend in the up-down direction, are formed at respective positions depending on the positions of the ridges 33.

The ridges 33 and the recessed grooves 34 are used for disposing a plurality of spool valves 1 close to each other by fitting the ridges 33 of adjacent spool valves 1 into the recessed grooves 34 of the adjacent spool valves 1 when the plurality of spool valves 1 are arranged and mounted on the manifold 40.

As illustrated in Fig. 1, the manifold 40 has a supply hole 42, which passes through the inside of the manifold 40, and a first discharge hole 43 and a second discharge hole 44, which pass through the inside of the manifold 40 on one side and the other side of the supply hole 42 respectively. The supply hole 42 is in communication with the input port P of each spool valve 1 mounted on the manifold 40 through a branch hole 42a. The first discharge hole 43 is in communication with the first discharge port E1 of the spool valve 1 through a branch hole 43a. The second discharge hole 44 is in communication with the second discharge port E2 of the spool valve 1 through a branch hole 44a.

The operation of the spool valve 1 having the configuration is described. Fig. 1 illustrates a switching state in which the pilot valve 3 is off. The lower half of Fig. 7 illustrates a similar switching state. In the switching state, the pilot fluid in the first pilot chamber 14a is discharged by the pilot valve 3, and a pilot fluid is always supplied to the second pilot chamber 16a. Thus, the spool 4 is at a first switching position by being pushed by the second pilot piston 12.

In this case, the first output land 4a and the first output packing portion 10a close the first output passage PA1 connecting the input port P and the first output port A1 by being fitted into the first output passage PA1. The second output land 4b and the second output packing portion 10b open the second output passage PA2 connecting the input port P and the second output port A2 by slipping out of the second output passage PA2 and by taking a position across the input port P. The first discharge land 4c and the first discharge packing portion 10c open the first discharge passage AE1 connecting the first output port A1 and the first discharge port E1 by slipping out of the first discharge passage AE1 and by taking a position across the first discharge communication opening 7e1. The second discharge land 4d and the second discharge packing portion 10d close the second discharge passage AE2 connecting the second output port A2 and the second discharge port E2 by being fitted into the second discharge passage AE2.

When the pilot valve 3 is turned on from this state, a pilot fluid is supplied to the first pilot chamber 14a by the pilot valve 3, and the pilot fluid presses the first pilot piston 11 to the right in Figs. 1 and 7. Thus, the first pilot piston 11 moves forward by being subjected to an acting force based on the difference in pressure-receiving area between the first pilot piston 11 and the second pilot piston 12, and the spool 4 is displaced to a second switching position illustrated in the upper half of Fig. 7.

As a result, the first output land 4a and the first output packing portion 10a open the first output passage PA1 by being displaced to a position across the input port P. The second output land 4b and the second output packing portion 10b close the second output passage PA2 by being fitted into the second output passage PA2. The first discharge land 4c and the first discharge packing portion 10c close the first discharge passage AE1 by being fitted into the first discharge passage AE1. The second discharge land 4d and the second discharge packing portion 10d open the second discharge passage AE2 by being displaced to a position across the second discharge communication opening 7e2.

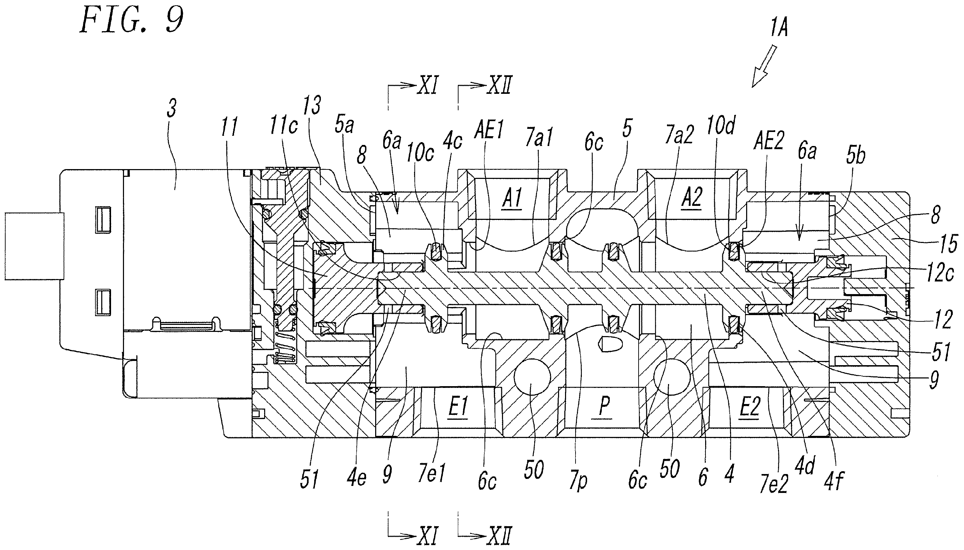

When the first discharge land 4c and the first discharge packing portion 10c open the first discharge passage AE1, as represented by arrow a in Fig. 2, a discharge fluid flows from the first output port A1 toward the first discharge port E1 by flowing on the insides of the first discharge land 4c and the first discharge packing portion 10c and then through the first discharge communication opening 7e1. In addition, as represented by arrow b in Fig. 2, the discharge fluid flows toward the discharge port E1 by bypassing the upper halves of the first discharge land 4c and the first discharge packing portion 10c through the upper recessed groove 8, flowing into the enlarged hole 6a, and flowing on the outsides (through positions closer to back surfaces) of the first discharge land 4c and the first discharge packing portion 10c and then through the lower recessed groove 9 and the first discharge communication opening 7e1. In this case, to increase the flow rate of the discharge fluid more than that in the case in which an annular recess is formed at the position of a discharge port as in a known spool valve illustrated in Fig. 9, the sectional areas of the upper recessed groove 8 and the lower recessed groove 9, that is, for example, the depths and the groove widths of the upper recessed groove 8 and the lower recessed groove 9, are formed sufficiently to increase the flow rate. Thus, the total discharge flow rate is higher than that in the case in which an annular recess is formed at the position of a discharge port as in the known spool valve illustrated in Fig. 9. This applies to the case in which the second discharge land 4d and the second discharge packing portion 10d open the second discharge passage AE2.

Annular recesses such as those formed in the known spool valve are not formed in the portions of the valve hole 6 where the communication openings 7p, 7a1, 7a2, 7e1, and 7e2 are open. Thus, the hole surface of the valve hole 6 is continuous in the direction along the axis L throughout the length of the valve hole 6 without breaking even at the positions of the communication openings 7p, 7a1, 7a2, 7e1, and 7e2. Accordingly, even if each of the packing portions 10a, 10b, 10c, and 10d is at any switching position, at least a portion thereof is in contact with the hole surface of the valve hole 6, and the switching operation is performed with the packing portions 10a, 10b, 10c, and 10d guided by the hole surface. As a result, for example, packing portions may be caught or fall off in the known spool valve having annular recesses but are not caught or do not fall off in the spool valve 1.

In addition, the processing for forming annular recesses at the positions of the communication openings 7p, 7a1, 7a2, 7e1, and 7e2 does not have to be performed after casting of the valve body 5, and it is thus easy to manufacture the valve body 5.

Guide lands that guide the sliding of the spool 4, such as those formed in a spool of the known spool valve illustrated in Fig. 9, are not formed on the spool 4. However, the pilot pistons 11 and 12 are connected concentrically to the respective ends of the spool 4, and the respective ends of the spool 4 are supported by the pilot pistons 11 and 12. Thus, the switching operation of the spool 4 is smoothly performed, and malfunctions due to, for example, an inclination of the spool 4 are not caused.

When the pressure fluid is discharged from the output ports A1 and A2 through the discharge ports E1 and E2, some of the pressure fluid may be leaked to the outside through the spaces between the screw insertion holes 31a and 31b and respective fixing screws 32. Such a leak can be completely stopped by sealing the spaces.

When the spool valve 1 is not mounted on the manifold 40, the screw insertion holes 31a and 31b can be closed by, for example, plugs.

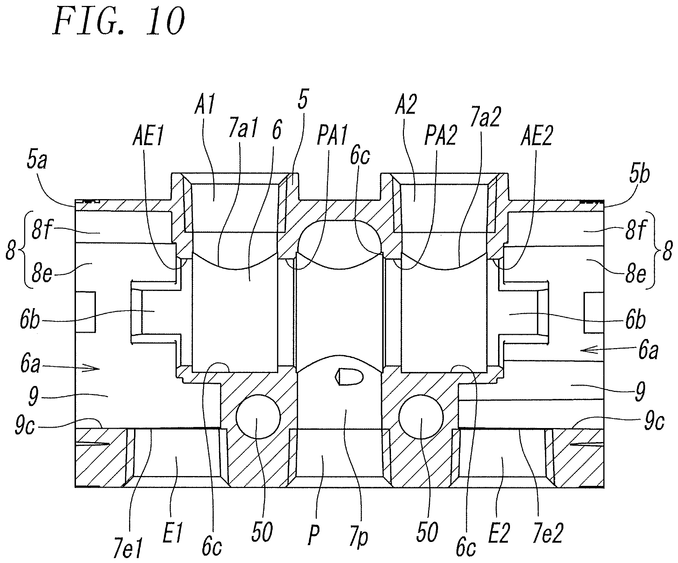

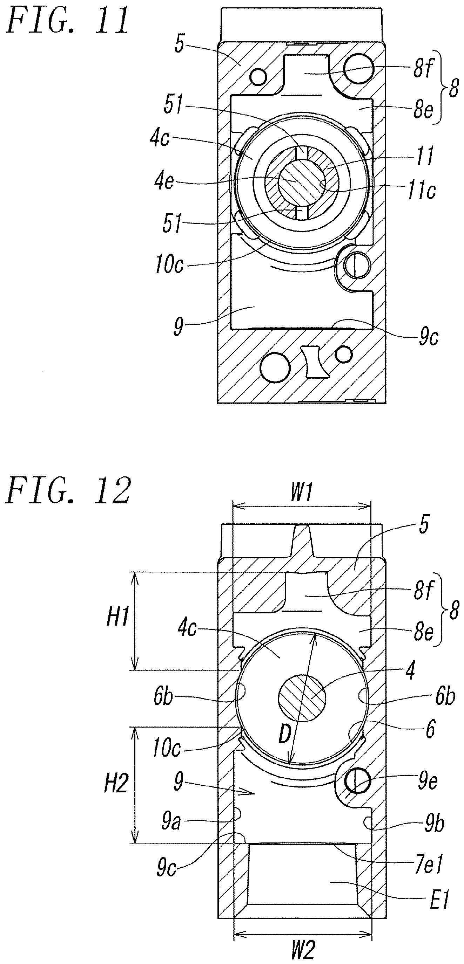

Figs. 9 to 12 illustrate a second embodiment of a spool valve according to the present invention. In the spool valve 1A in the second embodiment, the structure of enlarged holes 6a positioned at the respective ends of a valve hole 6 and the structure in which recesses 6c are formed at the respective positions where an input port P and output ports A1 and A2 are in communication with the valve hole 6 differ from the structure of the spool valve 1 in the first embodiment.

First, the enlarged holes 6a of the spool valve 1A are described. Although the enlarged hole 6a at a position closer to a first end 5a of a valve body 6 is described below, the enlarged hole 6a at a position closer to a second end 5b of the valve body 6 has the same structure. For this reason, when referring to the enlarged hole 6a at the position closer to the second end 5b, the first end 5a, a first discharge port E1, a first discharge communication opening 7e1, a first discharge passage AE1, a first discharge land 4c, and a first discharge packing portion 10c in the following descriptions can be respectively read as the second end 5b, a second discharge port E2, a second discharge communication opening 7e2, a second discharge passage AE2, a second discharge land 4d, and a second discharge packing portion 10d.

In the enlarged hole 6a, an upper recessed groove 8 has a section having a substantially projecting shape and includes a horizontally oriented portion 8e, in which a groove width W1 is slightly larger than a diameter D of the valve hole 6, and a vertically oriented portion 8f, which rises from a portion of the horizontally oriented portion 8e. A lower recessed groove 9 includes left and right side walls 9a and 9b, and a groove bottom wall 9c, which is flat overall. A projecting wall portion 9e, which projects into the lower recessed groove 9, is formed on the one side wall 9b so as to extend in a direction along an axis L. A groove width (maximum groove width) W1 of the upper recessed groove 8 and a groove width (maximum groove width) W2 of the lower recessed groove 9 are equal to each other. A depth H2 from a hole surface portion 6b of the lower recessed groove 9 is larger than a depth H1 from the hole surface portion 6b of the upper recessed groove 8. The groove bottom wall 9c of the lower recessed groove 9 extends, beyond the position of the first discharge passage AE1, to the position where the groove bottom wall 9c completely crosses the entire first discharge port E1. The first discharge port E1 is in communication with an inner end portion of the groove bottom wall 9c through the first discharge communication opening 7e1.

In addition, in the enlarged hole 6a, a pair of the hole surface portions 6b, each of which is formed by a portion of the hole surface of the valve hole 6, extend in the direction along the axis L from the positions where the hole surface portions 6b are connected to the first discharge passage AE1 to the middle position of the enlarged hole 6a. The hole surface portions 6b are not formed in the area from the middle position to the first end 5a of a valve body 5. In the area where the hole surface portions 6b are not formed, the upper recessed groove 8 and the lower recessed groove 9 are connected and combined together, and the valve hole 6 is completely merged therein. Thus, in the area, there are no boundaries between the valve hole 6, the upper recessed groove 8, and the lower recessed groove 9.

The area where the hole surface portions 6b are formed in the enlarged hole 6a is the area where the first discharge land 4c and the first discharge packing portion 10c are displaced to open or close the first discharge passage AE1. In the area, the first discharge packing portion 10c is guided by the hole surface portions 6b.

Next, the recesses 6c are described. That is, the recesses 6c, each of which has an annular shape, for increasing the hole diameter of the valve hole 6, are formed at the respective positions where the input port P and the output ports A1 and A2 are in communication with the valve hole 6. The input port P and the output ports A1 and A2 are respectively in communication with the recesses 6c via an input communication opening 7p and output communication openings 7a1 and 7a2. The recesses are not formed at the positions where the discharge ports E1 and E2 are in communication with the valve hole 6.

The passage sectional areas of output passages PA1 and PA2 respectively connecting the input port P and the output port A1, and the input port P and the output port A2, and the passage sectional areas of the discharge passages AE1 and AE2 respectively connecting the output port A1 and the discharge port E1, and the output port A2 and the discharge port E2 are increased by forming the recesses 6c. Thus, the flow rate of a pressure fluid controlled by the spool valve 1A is further increased in total.

In addition, the spool valve 1B differs from the spool valve in the first embodiment in that the spool valve 1B is configured to be connected to other spool valves having the same configuration. That is, two connecting holes 50, which pass through the valve body 5 in the width direction, are formed in total in the respective portions of the valve body 5 between the input port P and the discharge port E1, and between the input port P and the discharge port E2. The spool valve 1A is configured to form a valve assembly by fixing a plurality of spool valves 1A in contact with each other in the width direction with nuts and screw stocks (not illustrated) that are inserted into the connecting holes 50. Thus, the screw insertion holes 31a and 31b, which are formed in the valve body 5 of the spool valve 1 in the first embodiment, are not formed in the valve body 5.

In addition, the spool valve 1B differs from the spool valve 1 in the first embodiment in that connecting holes 11c and 12c respectively formed in pilot pistons 11 and 12 to fit connecting portions 4e and 4f, each of which has a cylindrical shape and which are positioned at the respective end portions of a spool 4, thereinto each have a circular shape. The reference numeral 51 in the figure represents air vent holes for releasing air in the connecting holes 11c and 12c when the connecting portions 4e and 4f are respectively inserted into the connecting holes 11c and 12c.

The guide hole 27 and the guide shaft 28, which are respectively formed in the first pilot piston 11 and on the first piston holder 13 of the spool valve 1 in the first embodiment, are not formed in the first pilot piston 11 and on a first piston holder 13 of the spool valve 1B.

The configuration of the spool valve 1A in the second embodiment other than the above configuration is substantially the same as the configuration of the spool valve 1 in the first embodiment. For this reason, identical main components thereof are assigned the same reference signs as those of the spool valve 1 in the first embodiment, and the detailed descriptions thereof are omitted.

In the spool valves 1 and 1A in the embodiments, the two output ports A1 and A2 are disposed in the upper surface of the valve body 5, and the input port P and the discharge ports E1 and E2 are disposed in the lower surface of the valve body 5. However, in the present invention, all the ports P, E1, E2, A1, and A2 may be disposed in the lower surface of the valve body 5.

In addition, the spool valves 1 and 1A in the embodiments are single-pilot spool valves each including one pilot valve 3. However, the spool valve in the present invention may be a double-pilot spool valve including two pilot valves 3. The double-pilot spool valve can be obtained by, for example, in Fig. 1, attaching the first piston holder 13, which is attached to the first end 5a of the valve body 5, the first pilot piston 11, and a similar one to the pilot valve 3, instead of the second piston holder 15 and the second pilot piston 12, to the second end 5b of the valve body 5.

In addition, although the spool valves 1 and 1A in the embodiments are five-port valves, the present invention can also be applied to three-port valves or four-port valves.

### Reference Signs List

- 1, 1A: spool valve
- 3: pilot valve
- 4: spool
- 4a: first output land
- 4b: second output land
- 4c: first discharge land
- 4d: second discharge land
- 4e: first connecting portion
- 4f: second connecting portion
- 5: valve body
- 6: valve hole
- 6a: enlarged hole
- 6b: hole surface portion
- 8: upper recessed groove
- 9: lower recessed groove
- 10a: first output packing portion
- 10b: second output packing portion
- 10c: first discharge packing portion
- 10d: second discharge packing portion
- 11: first pilot piston
- 11c: connecting hole
- 12: second pilot piston
- 12c: connecting hole
- 13: first piston holder
- 15: second piston holder
- P: input port
- A1: first output port
- A2: second output port
- E1: first discharge port
- E2: second discharge port
- PA1: first output passage
- PA2: second output passage
- AE1: first discharge passage
- AE2: second discharge passage
- L: axis
- D: diameter of valve hole
- W1: groove width of upper recessed groove
- W2: groove width of lower recessed groove

## Claims

1. A spool valve comprising:
a valve body having a height, a width, and a length;
a plurality of ports that are open in an end face or both end faces of the valve body in a direction of the height of the valve body;
a valve hole extending inside the valve body in a direction of the length of the valve body;
a spool housed inside the valve hole so as to be displaceable in a direction along an axis of the valve hole; and
a pilot valve that drives the spool via a pilot piston, wherein
the plurality of ports are an input port, an output port, and a discharge port, each of which is in communication with the valve hole, the discharge port being disposed at a position closer to an end portion of the valve body than the output port,
an enlarged hole is formed at an end portion of the valve hole by forming, at the end portion closer to the position where the discharge port is disposed of both end portions of the valve body in the direction of the length of the valve body, an upper recessed groove and a lower recessed groove for increasing a sectional area of the valve hole in the direction of the height of the valve body, the upper recessed groove and the lower recessed groove being formed at respective positions in the valve hole facing each other in an up-down direction so as to extend from the end portion of the valve body to a position of the discharge port, the enlarged hole being in communication with the discharge port through the lower recessed groove,
the spool includes an output land and an output packing portion that open and close an output passage connecting the input port and the output port, and a discharge land and a discharge packing portion that open and close a discharge passage connecting the output port and the discharge port, and
when the discharge land and the discharge packing portion open the discharge passage by displacing of the spool, the discharge passage and the discharge port are in communication with each other through the enlarged hole by positioning the discharge land and the discharge packing portion inside the enlarged hole.

2. The spool valve according to Claim 1, wherein
a pair of hole surface portions, each of which is formed by a portion of a hole surface of the valve hole, are interposed, so as to face each other with the axis in between, between the upper recessed groove and the lower recessed groove at an inner side surface of the enlarged hole, and
when the discharge land and the discharge packing portion are displaced to open or close the discharge passage, the discharge packing portion is guided while being in contact with the hole surface portions.

3. The spool valve according to Claim 2, wherein the pair of hole surface portions are formed in at least an area in the enlarged hole where the discharge land and the discharge packing portion are displaced to open or close the discharge passage.

4. The spool valve according to Claim 1, wherein
groove widths of the upper recessed groove and the lower recessed groove are equal to each other, and
the groove widths are each larger than a diameter of the valve hole.

5. The spool valve according to Claim 1, wherein
a piston holder is attached to the end portion of the valve body where the enlarged hole is formed,
the pilot piston is housed inside the piston holder,
a portion of the pilot piston projects into the enlarged hole,
a connecting portion is formed at an end portion of the spool at a position adjacent to the discharge land so as to project into the enlarged hole, and
the spool is connected to the pilot piston via the connecting portion.

6. The spool valve according to Claim 5, wherein
the connecting portion is formed by a connecting shaft extending along the axis,
a connecting hole is formed in the pilot piston, and
the spool and the pilot piston are connected so as to be concentric with each other by fitting the connecting shaft into the connecting hole.

7. The spool valve according to Claim 1, wherein
the spool valve is a five-port valve and has one input port, two output ports, and two discharge ports,
the two discharge ports are formed at respective positions closer to one end and another end of the valve body,
the enlarged hole and the discharge port are formed at each of positions closer to one end and another end of the valve hole, and
the discharge land, the discharge packing portion, and the pilot piston are disposed at each of positions closer to one end and another end of the spool.

8. The spool valve according to Claim 7, wherein an external shape and an internal shape of the valve body are each axisymmetric about a central axis passing through a center of the input port.

## Amended claims

### Amended claims under Art. 19.1 PCT

1. (Currently Amended) A spool valve comprising:
a valve body having a height, a width, and a length;
a plurality of ports that are open in an end face or both end faces of the valve body in a direction of the height of the valve body;
a valve hole extending inside the valve body in a direction of the length of the valve body;
a spool housed inside the valve hole so as to be displaceable in a direction along an axis of the valve hole; and
a pilot valve that drives the spool via a pilot piston, wherein
the plurality of ports are an input port, an output port, and a discharge port, each of which is in communication with the valve hole, the discharge port being disposed at a position closer to an end portion of the valve body than the output port,
an enlarged hole is formed at an end portion of the valve hole by forming, at the end portion closer to the position where the discharge port is disposed of both end portions of the valve body in the direction of the length of the valve body, an upper recessed groove and a lower recessed groove for increasing a sectional area of the valve hole in the direction of the height of the valve body, the upper recessed groove and the lower recessed groove being formed at respective positions in the valve hole facing each other in an up-down direction so as to extend from the end portion of the valve body to a position of the discharge port, the enlarged hole being in communication with the discharge port through the lower recessed groove,
a distance from a groove bottom wall of the upper recessed groove to a groove bottom wall of the lower recessed groove is larger than a groove width of the upper recessed groove and a groove width of the lower recessed groove,
the spool includes an output land and an output packing portion that open and close an output passage connecting the input port and the output port, and a discharge land and a discharge packing portion that open and close a discharge passage connecting the output port and the discharge port, and
when the discharge land and the discharge packing portion open the discharge passage by displacing of the spool, the discharge passage and the discharge port are in communication with each other through the enlarged hole by positioning the discharge land and the discharge packing portion inside the enlarged hole.

2. The spool valve according to Claim 1, wherein
a pair of hole surface portions, each of which is formed by a portion of a hole surface of the valve hole, are interposed, so as to face each other with the axis in between, between the upper recessed groove and the lower recessed groove at an inner side surface of the enlarged hole, and
when the discharge land and the discharge packing portion are displaced to open or close the discharge passage, the discharge packing portion is guided while being in contact with the hole surface portions.

3. The spool valve according to Claim 2, wherein the pair of hole surface portions are formed in at least an area in the enlarged hole where the discharge land and the discharge packing portion are displaced to open or close the discharge passage.

4. The spool valve according to Claim 1, wherein
the groove widths of the upper recessed groove and the lower recessed groove are equal to each other, and
the groove widths are each larger than a diameter of the valve hole.

5. The spool valve according to Claim 1, wherein
a piston holder is attached to the end portion of the valve body where the enlarged hole is formed,
the pilot piston is housed inside the piston holder,
a portion of the pilot piston projects into the enlarged hole,
a connecting portion is formed at an end portion of the spool at a position adjacent to the discharge land so as to project into the enlarged hole, and
the spool is connected to the pilot piston via the connecting portion.

6. The spool valve according to Claim 5, wherein
the connecting portion is formed by a connecting shaft extending along the axis,
a connecting hole is formed in the pilot piston, and
the spool and the pilot piston are connected so as to be concentric with each other by fitting the connecting shaft into the connecting hole.

7. The spool valve according to Claim 1, wherein
the spool valve is a five-port valve and has one input port, two output ports, and two discharge ports,
the two discharge ports are formed at respective positions closer to one end and another end of the valve body,
the enlarged hole and the discharge port are formed at each of positions closer to one end and another end of the valve hole, and
the discharge land, the discharge packing portion, and the pilot piston are disposed at each of positions closer to one end and another end of the spool.

8. The spool valve according to Claim 7, wherein an external shape and an internal shape of the valve body are each axisymmetric about a central axis passing through a center of the input port.

Statement under Art. 19.1 PCT
Claim 1 clarifies that the distance from the groove bottom wall of the upper recessed groove to the groove bottom wall of the lower recessed groove is larger than the groove width of the upper recessed groove and the groove width of the lower recessed groove.

Document 1 discloses that seal cylindrical portions 28a and 28b, whose diameters are each larger than that of a valve hole 12, are formed at respective end portions of the valve hole 12. The distance (longitudinal diameter) from the upper end to the lower end of each of the seal cylindrical portions 28a and 28b is equal to the width (transverse diameter) of each of the seal cylindrical portions 28a and 28b in the left-right direction.

Similarly, Document 2 discloses that tapered valve chambers 12 and 12' are formed at respective end portions of a bore 11. The distance (longitudinal diameter) from the upper end to the lower end of each of the valve chambers 12 and 12' is equal to the width (transverse diameter) of each of the valve chambers 12 and 12' in the left-right direction.

Thus, Documents 1 and 2 do not disclose the above matter in Claim 1. In addition, Document 3 does not disclose the above matter in Claim 1.
